# EUROPÄISCHE PATENTSCHRIFT

(11) **EP 1 614 501 B1**
(45) Veröffentlichungstag und Bekanntmachung des Hinweises auf die Patenterteilung: **08.04.2009**
(21) Anmeldenummer: 05010943.8
(22) Anmeldetag: 20.05.2005
(51) Int. Cl.: B23P 11/02, H05B 6/14, B23B 31/02

(54) **Verfahren und Vorrichtung zum thermischen Verformen einer Werkzeugaufnahme**
Method and device for thermically deforming a tool holder
Procédé et dispositif pour la déformation thermique d'un porte-outil

(30) Priorität: 07.07.2004 DE 102004033044
(43) Veröffentlichungstag der Anmeldung: 11.01.2006
(73) Patentinhaber: Bilz Werkzeugfabrik GmbH & Co. KG, 73760 Ostfildern (DE)
(72) Erfinder: Klaiber, Jörg-Achim Dr., 70563 Stuttgart (DE)
(74) Vertreter: Kratzsch, Volkhard

(56) Entgegenhaltungen:
- US-A1- 2001 024 020
- US-A1- 2003 088 972
- US-B1- 6 653 926
- PATENT ABSTRACTS OF JAPAN Bd. 2002, Nr. 02, 2. April 2002 (2002-04-02) -& JP 2001 287121 A (HITACHI HOMETEC LTD), 16. Oktober 2001 (2001-10-16)
- PATENT ABSTRACTS OF JAPAN Bd. 2000, Nr. 16, 8. Mai 2001 (2001-05-08) -& JP 2001 018128 A (HITACHI HOMETEC LTD), 23. Januar 2001 (2001-01-23)
- EASTMAN M: "SHRINK-FIT TOOLHOLDING" CUTTING TOOL ENGINEERING, CTE PUBLICATIONS, NORTHFIELD, IL, US, Bd. 49, Nr. 3, April 1997 (1997-04), Seiten 1-5, XP002949467 ISSN: 0011-4189
- PATENT ABSTRACTS OF JAPAN Bd. 2000, Nr. 20, 10. Juli 2001 (2001-07-10) -& JP 2001 062638 A (HITACHI HOMETEC LTD), 13. März 2001 (2001-03-13)

## Beschreibung

Die Erfindung bezieht sich auf ein Verfahren bzw eine Vorrichtung zum thermischen Verformen einer Werkzeugaufnahme, insbesondere zur Schrumpfbefestigung eines Werkzeuges in einer Werkzeugaufnahme, durch Erhitzen mittels einer induktiven Heizeinrichtung und Abkühlen. Ein solches Verfahren bzw eine Vorrichtung ist aus US-A-2003/0088972 bekannt.
Es ist ein Verfahren dieser Art bekannt, bei dem mittels Kontaktelementen die Werkzeugaufnahme berührend angetastet und auf diese Weise die Temperatur der Werkzeugaufnahme beim Erhitzen erfasst wird. Dieses Verfahren ist nachteilig, weil aufgrund des geringen Wärmeübergangs die Kontakttemperaturmessung extrem langsam vonstatten geht. Bei den Zeiten, die für das thermische Verformen einer Werkzeugaufnahme vorgesehen sind, insbesondere für die Schrumpfbefestigung eines Werkzeuges in der Werkzeugaufnahme, die nur wenige Sekunden betragen, ist die für die Temperaturmessung erforderliche Zeit ersichtlich viel zu lange.

Es ist ferner ein Verfahren dieser Art bekannt (US 2003/0088972 A1; Eastman M.: "Shrink-Fit Toolholding" Cutting Tool Engineering, CTE Publications, Northfield, IL, US, Bd. 49, Nr. 3, April 1997, Seiten 1-5, XP002949467 ISSN: 0011-4189), bei dem zur Temperaturermittlung der Werkzeugaufnahme als Temperatursensor ein optischer Sensor (Infrarotsensor) verwendet wird. Derartige Infrarot-Temperaturmesseinrichtungen sind auch bekannt aus JP 2001018128 A und JP 2001062638.

Der Erfindung liegt die Aufgabe zugrunde, ein Verfahren der eingangs genannten Art so zu gestalten, dass die Temperatur der Werkzeugaufnahme beim Erhitzen möglichst schnell und exakt erfassbar ist.

Die Aufgabe ist bei einem Verfahren der eingangs genannten Art gemäß der Erfindung durch die Merkmale im Anspruch 1 gelöst. Dadurch, dass man die Temperatur der Werkzeugaufnahme berührungslos und in Echtzeit in der Weise erfasst, dass man einen Widerstandstemperatursensor (Widerstandstemperaturmesser) in gleicher Weise wie die Werkzeugaufnahme durch induzierte Wechselströme im Wechselfeld der Heizeinrichtung induktiv aufheizt, und dass man als Kenngröße für die Temperatur der Werkzeugaufnahme die sich ergebende Änderung des spezifischen Widerstands des Sensors verwendet, erfolgt durch direkte Erwärmung des Sensors durch induzierte Wechselströme im Wechselfeld praktisch keinerlei zeitliche Verzögerung der Temperaturmessung. Auf diese Weise ist somit schnell und sehr exakt die Temperatur der im Wechselfeld erhitzten Werkzeugaufnahme ermittelbar. Somit lässt sich eine thermische Überlastung der Werkzeugaufnahme und/oder der Heizeinrichtung vermeiden sowie Energie und Zeit einsparen. Bedarfsweise ist die Heizleistung der Heizeinrichtung aufgrund der ermittelbaren Temperatur der Werkzeugaufnahme steuerbar und somit die Betriebsweise automatisierbar.

Weitere vorteilhafte Erfindungsmerkmale und Ausgestaltungen des Verfahrens ergeben sich aus den dazugehörigen Unteransprüchen.

Die Erfindung bezieht sich ferner auf eine Vorrichtung zum thermischen Verformen einer Werkzeugaufnahme, insbesondere zur Schrumpfbefestigung eines Werkzeuges in einer Werkzeugaufnahme, mit den Merkmalen im Anspruch 8. Eine Vorrichtung dieser Art ist einfach und kostengünstig und ermöglicht eine schnelle und präzise Erfassung der Temperatur der Werkzeugaufnahme in der für die Schrumpfbefestigung zur Verfügung stehenden sehr kurzen Zeit. Auf diese Weise ist mit einfachen Mitteln eine thermische Überlastung der Werkzeugaufnahme und/oder der Heizeinrichtung vermeidbar. Weitere vorteilhafte Erfindungsmerkmale und Ausgestaltungen, die diese Vorrichtung betreffen, ergeben sich aus den dazugehörigen Unteransprüchen.

Weitere Einzelheiten und Vorteile der Erfindung ergeben sich aus der nachfolgenden Beschreibung.

Das Verfahren und die Vorrichtung zur Durchführung des Verfahrens gemäß der Erfindung sind nachfolgend anhand eines in der Zeichnung gezeigten Ausführungsbeispieles näher erläutert. Es zeigen:
- Fig. 1: eine teilweise Seitenansicht mit einem schematischen Längsschnitt eines Teils einer Vorrichtung zum thermischen Verformen einer Werkzeugaufnahme,
- Fig. 2: eine schematische Ansicht in Pfeilrichtung II in Fig. 1.

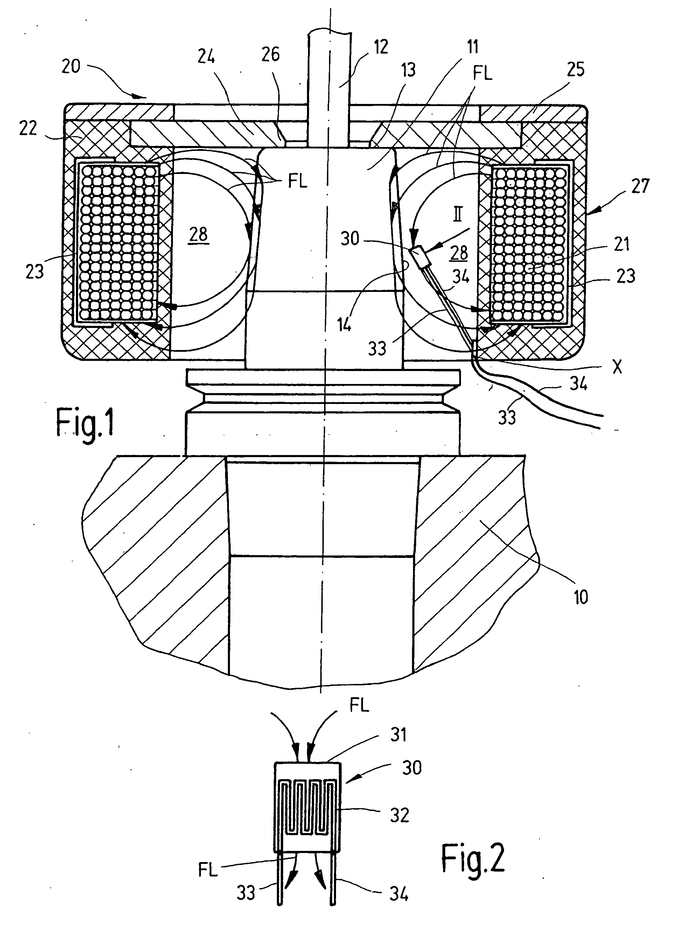

In der Zeichnung ist schematisch ein Aufnahmekörper 10 mit einer darin aufgenommenen Werkzeugaufnahme 11 dargestellt, in der ein Werkzeug 12 mittels Schrumpfbefestigung gespannt werden soll oder, wenn das Werkzeug 12 in der Werkzeugaufnahme 11 gespannt ist, durch Erhitzen der Werkzeugaufnahme 11 wieder freigegeben wird, damit das Werkzeug 12 entnommen werden kann. Bei der Werkzeugaufnahme 11 kann es sich um ein beliebiges Bauteil handeln, z.B. einen Spindelabschnitt, ein Futter, einen Teil eines Futters, eines Adapters od. dgl. Beim Werkzeug 12 handelt es sich ebenfalls um ein beliebiges Werkzeug, z.B. um einen Bohrer, Gewindebohrer, Fräser, ein Stufenwerkzeug od. dgl. Zum thermischen Verformen der Werkzeugaufnahme 11 für das Spannen bzw. Lösen des Werkzeugs 12 ist eine nur schematisch angedeutete induktive Heizeinrichtung 20 vorgesehen, die zum Erhitzen der Werkzeugaufnahme 11 entlang einer nicht gezeigten Führung von oben her über die Werkzeugaufnahme 11 bewegt wird und in dieser Position gemäß Fig. 1 mittels der Führung zentriert gehalten ist. Die Heizeinrichtung 20 weist eine ringförmige Induktionsspule 21 auf, die in einem ringförmigen, z.B. aus Kunststoff bestehenden, Spulengehäuse 22 enthalten ist. Im äußeren Bereich der Induktionsspule 21 kann diese durch magnetisch leitende Ferrite 23 kurzgeschlossen sein. Auf der in Fig. 1 oberen Seite des Spulengehäuses 22 ist eine Polscheibe 24 gehalten, die magnetisch leitend ist und wie die Ferrite 23 einen Teil des magnetischen Flusses leitet. Die Polscheibe 24 ist im Bereich ihres äußeren Randes von einem Deckel 25 überdeckt, der mit dem Spulengehäuse 22 verbunden ist. Das Spulengehäuse 22 ist etwa topfförmig.

Zum Erwärmen der Werkzeugaufnahme 11 wird die Heizeinrichtung 20 in die in Fig. 1 gezeigte Position abgesenkt, wobei die Polscheibe 24 mit ihrem inneren Randbereich 26 auf der Oberseite 13 der Werkzeugaufnahme 11 aufsitzt. Die für den Einspannvorgang bzw. Ausspannvorgang des Werkzeugs 12 notwendige Erwärmung erfolgt auf induktivem Wege mittels der Induktionsspule 21, die mit einem hochfrequenten Wechselstrom betrieben wird. Durch Anlegen dieses Wechselstroms wird um den insgesamt zylindrischen Spulenkörper 27 ein geschlossenes Magnetfeld erzeugt. Die Feldlinien FL treten an der Oberseite der Induktionsspule 21 aus, fließen über den im Ringraum des Spulenkörpers 27 befindlichen Teil der Werkzeugaufnahme 11 und schließen sich über die magnetisch leitenden Ferrite 23, so dass die äußeren Feldlinien nahe der Induktionsspule 21 verlaufen. Aufgrund dieses erzeugten Wechselfeldes werden in der Werkzeugaufnahme 11 Wirbelströme erzeugt, die zur Erwärmung der Werkzeugaufnahme 11 führen. Infolge der Temperaturausdehnung weitet sich die nicht weiter dargestellte innere Aufnahme der Werkzeugaufnahme 11 so weit, dass das Werkzeug 12 mit seinem Schaft eingesetzt bzw. herausgenommen werden kann.

Um die Werkzeugaufnahme 11 und/oder die Heizeinrichtung 20 vor thermischer Überlastung zu schützen, ist im Wechselfeld der Heizeinrichtung 20 ein Sensor 30 angeordnet, mittels dessen die Temperatur in diesem Bereich berührungslos und in Echtzeit erfasst und als Kenngröße für die Temperatur der Werkzeugaufnahme 11 verwendet wird. Der Sensor 30 ist im inneren Ringbereich 28 des Spulenkörpers 27 so angeordnet, dass er im Wechselfeld der Heizeinrichtung 20 induktiv aufgeheizt wird. Dabei ist der Sensor 30 in Abstand vom Spulenkörper 27 und nahe der benachbarten Oberfläche 14 der Werkzeugaufnahme 11 angeordnet und gehalten. Der Sensor 30 arbeitet berührungslos. Er ist aus einem Widerstandsthermometer gebildet, dessen sich aufgrund der Temperaturänderung ergebende Änderung des spezifischen Widerstandes als Kenngröße für die Temperatur der Werkzeugaufnahme 11 verwendet wird. In vorteilhafter Weise ist der Sensor 30 aus Metall gebildet, insbesondere aus Platin. Der Sensor 30 besteht aus einer Trägerplatte 31, auf die eine Wendel 32 aus Metall, vorzugsweise Platin, aufgalvanisiert ist. Zwei Leiter 33 und 34 sind am Anfang und Ende der Wendel 32 angeschweißt. Die Leiter 33 und 34 sind ausreichend biegesteif, so dass diese im unteren inneren Ringbereich bei X am Spulenkörper 27 derart fixiert werden können, dass dadurch der Sensor 30 nahe der Oberfläche 14 der Werkzeugaufnahme 11 und im inneren Ringbereich des Spulenkörpers 27 so platziert ist, dass der Sensor 30 den gleichen Einflüssen wie die Werkzeugaufnahme 11 im Wechselfeld ausgesetzt ist. Das für die induktive Erwärmung des Sensors 30 zuständige Wechselfeld bzw. dessen Feldlinien FL sind in Fig. 2 mit Pfeilen angedeutet. Aufgrund dieser Anordnung und Gestaltung wird der Sensor 30 auf gleiche Weise wie die Werkzeugaufnahme 11 erhitzt ohne zeitliche Verzögerung, d.h. in Echtzeit. Aufgrund der sehr geringen Masse des Sensors 30 erfolgt dessen Aufheizung sehr schnell. Mit Erhitzung des Sensors 30 erhöht sich der spezifische Widerstand der Wendel 32. Diese Widerstandsänderung wird mit einer nicht weiter dargestellten Messeinrichtung, z.B.

Messbrücke, ausgewertet. Dabei ist die Messgeschwindigkeit ausreichend hoch, so dass die Heizeinrichtung 20 z.B. in Abhängigkeit von der Temperaturerfassung durch den Sensor 30 gesteuert, z.B. abgeschaltet, werden kann. Hierzu dient eine die Heizeinrichtung 20 steuernde, nicht weiter dargestellte Steuereinrichtung, die von der nicht gezeigten Messeinrichtung angesteuert wird. Dadurch, dass der Sensor 30, insbesondere in Gestalt des Widerstandsthermometers, aus Metall, insbesondere aus Platin, besteht, kann dieser bis etwa 800°C belastet werden. Der große Vorteil der beschriebenen Anordnung und Verfahrensweise liegt darin, dass auf kontaktlose Weise möglichst nahe der Oberfläche 14 der Werkzeugaufnahme 11 die Temperatur der Werkzeugaufnahme 11 durch den Sensor 30 in Echtzeit erfasst wird, und zwar dadurch, dass eine direkte Erwärmung des Sensors 30 durch induzierte Wechselströme im Wechselfeld der Induktionsspule 21 erfolgt.

Die Vorrichtung gemäß der Erfindung ermöglicht somit eine Verfahrensweise, bei der man die Temperatur durch das Wechselfeld der Heizeinrichtung 20 mit einem Sensor 30 berührungslos in Echtzeit erfasst und als Kenngröße für die Temperatur der Werkzeugaufnahme 11 verwendet. Bei der Temperaturerfassung wird die sich aufgrund der Temperaturänderung ergebende Änderung des spezifischen Widerstands des Sensors 30 als Kenngröße für die Temperatur der Werkzeugaufnahme 11 herangezogen. Der Sensor 30 wird im Wechselfeld der Heizeinrichtung 20 induktiv aufgeheizt. Die Temperatur wird im inneren Ringbereich und dabei in Abstand vom Spulenkörper 27 der Induktionsspule 21 der Heizeinrichtung 20 erfasst, und zwar auf berührungslose Weise nahe der Oberfläche 14 der Werkzeugaufnahme 11. Die Änderung des spezifischen Widerstands des Sensors 30, insbesondere in Form des Widerstandsthermometers, wird mit einer Messeinrichtung, z.B. Messbrücke, ausgewertet, wobei die Heizeinrichtung 20 in Abhängigkeit von der Temperaturerfassung durch den Sensor 30 gesteuert werden kann, insbesondere abgeschaltet werden kann. Auf diese Weise kann eine thermische Überlastung der Werkzeugaufnahme 11 und/ oder der Heizeinrichtung 20 einfach und sicher vermieden werden. Die Kenngröße für die Temperatur der Werkzeugaufnahme 11 ist schnell und exakt erfassbar. Dabei kann bei Erreichen der Kenngröße z.B. auch ein optisches, akustisches oder sonstiges Steuersignal abgegeben werden. Auch ist es möglich, die Heizleistung der Heizeinrichtung 20 in Abhängigkeit von der Kenngröße zu steuern und dadurch die Vorrichtung weiter zu automatisieren.

## Patentansprüche

1. Verfahren zum thermischen Verformen einer Werkzeugaufnahme (11), insbesondere zur Schrumpfbefestigung eines Werkzeugs (12) in einer Werkzeugaufnahme (11), durch Erhitzen mittels einer induktiven Heizeinrichtung (20) und Abkühlen,
**dadurch gekennzeichnet,**
**dass** man die Temperatur der Werkzeugaufnahme (11) berührungslos in Echtzeit in der Weise erfasst, dass man einen Widerstandstemperatursensor (30) in gleicher Weise wie die Werkzeugaufnahme (11) durch induzierte Wechselströme im Wechselfeld der Heizeinrichtung (20) induktiv aufheizt, und dass man als Kenngröße für die Temperatur der Werkzeugaufnahme (11) die sich ergebende Änderung des spezifischen Widerstands des Sensors (30) verwendet.

2. Verfahren nach Anspruch 1,
**dadurch gekennzeichnet,**
**dass** der Sensor (30) die Temperatur im inneren Ringbereich und dabei in Abstand vom Spulenkörper (27) einer Induktionsspule (21) der Heizeinrichtung (20) erfasst.

3. Verfahren nach Anspruch 1 oder 2,
**dadurch gekennzeichnet,**
**dass** man mit dem Sensor (30) berührungslos die Temperatur nahe der Oberfläche (14) der Werkzeugaufnahme (11) erfasst.

4. Verfahren nach einem der Ansprüche 1 bis 3,
**dadurch gekennzeichnet,**
**dass** man die Temperatur mit einem metallischen Sensor (30) erfasst.

5. Verfahren nach einem der Ansprüche 1 bis 4,
**dadurch gekennzeichnet,**
**dass** man die Temperatur mit einem Sensor (30) aus Platin erfasst.

6. Verfahren nach einem der Ansprüche 1 bis 5,
**dadurch gekennzeichnet,**
**dass** die Änderung des spezifischen Widerstands des Sensors (30) mit einer Messeinrichtung, z.B. Messbrücke, ausgewertet wird.

7. Verfahren nach einem der Ansprüche 1 bis 6,
**dadurch gekennzeichnet,**
**dass** man die Heizeinrichtung (20) in Abhängigkeit von der Temperaturerfassung durch den Sensor (30) steuert, z.B. abschaltet.

8. Vorrichtung zum thermischen Verformen einer Werkzeugaufnahme (11), insbesondere zur Schrumpfbefestigung eines Werkzeugs (12) in einer Werkzeugaufnahme (11), durch Erhitzen mittels einer induktiven Heizeinrichtung (20) und Abkühlen,
**dadurch gekennzeichnet,**
**dass** im Wechselfeld der Heizeinrichtung (20) ein Widerstandstemperatursensor (30) angeordnet ist, der zur berührungslosen Temperaturerfassung der Werkzeugaufnahme (11) in Echtzeit in diesem Bereich durch induktive Aufheizung aufgrund induzierter Wechselströme im Wechselfeld und Änderung seines spezifischen Widerstands als Kenngröße für die Temperatur der Werkzeugaufnahme (11) geeignet ist.

9. Vorrichtung nach Anspruch 8,
**dadurch gekennzeichnet,**
**dass** der Sensor (30) im Wechselfeld der Heizeinrichtung (20) induktiv aufgeheizt wird.

10. Vorrichtung nach Anspruch 8 oder 9,
**dadurch gekennzeichnet,**
**dass** der Sensor (30) im inneren Ringbereich und dabei in Abstand vom Spulenkörper (27) einer Induktionsspule (21) der Heizeinrichtung (20) angeordnet ist.

11. Vorrichtung nach einem der Ansprüche 8 bis 10,
**dadurch gekennzeichnet,**
**dass** der berührungslos arbeitende Sensor (30) nahe der Oberfläche (14) der Werkzeugaufnahme (11) angeordnet ist.

12. Vorrichtung nach einem der Ansprüche 8 bis 11,
**dadurch gekennzeichnet,**
**dass** der Sensor (30) so ausgebildet ist, dass dessen sich aufgrund der Temperaturänderung ergebende Änderung des spezifischen Widerstands als Kenngröße für die Temperatur der Werkzeugaufnahme (11) verwendbar ist.

13. Vorrichtung nach einem der Ansprüche 8 bis 12,
**dadurch gekennzeichnet,**
**dass** der Sensor (30) aus Metall gebildet ist.

14. Vorrichtung nach einem der Ansprüche 8 bis 13,
**dadurch gekennzeichnet,**
**dass** der Sensor (30) aus Platin besteht.

15. Vorrichtung nach einem der Ansprüche 8 bis 14,
**dadurch gekennzeichnet,**
**dass** der Sensor (30) mit einer Messeinrichtung, z.B. Messbrücke, verbunden ist, mittels der die sich aufgrund der Temperaturänderung ergebende Änderung des spezifischen Widerstands ausgewertet wird.

16. Vorrichtung nach Anspruch 15,
**gekennzeichnet durch**
eine die Heizeinrichtung (20) steuernde Steuereinrichtung, die von der Messeinrichtung angesteuert wird.

## Claims

1. Method for the thermal deformation of a tool-holding fixture (11), in particular for the shrink fastening of a tool (12) in a tool-holding fixture (11), by heating by means of an inductive heating device (20) and cooling, **characterized in that** the temperature of the tool-holding fixture (11) is detected contactlessly in real time **in that** a resistance temperature sensor (30) is inductively heated in the same way as the tool-holding fixture (11) by means of induced alternating currents in the alternating field of the heating device (20), and **in that** the resulting change in the specific resistance of the sensor (30) is used as a characteristic quantity for the temperature of the tool-holding fixture (11).

2. Method according to Claim 1, **characterized in that** the sensor (30) detects the temperature in the inner annular region and at the same time at a distance from the coil former (27) of an induction coil (21) of the heating device (20).

3. Method according to Claim 1 or 2, **characterized in that** the temperature near the surface (14) of the tool-holding fixture (11) is detected contactlessly by means of the sensor (30).

4. Method according to one of Claims 1 to 3,
**characterized in that** the temperature is detected by means of a metallic sensor (30).

5. Method according to one of Claims 1 to 4,
**characterized in that** the temperature is detected by means of a sensor (30) consisting of platinum.

6. Method according to one of Claims 1 to 5,
**characterized in that** the change in the specific resistance of the sensor (30) is evaluated by means of a measuring device, for example a measuring bridge.

7. Method according to one of Claims 1 to 6,
**characterized in that** the heating device (20) is controlled, for example switched off, as a function of the detection of temperature by the sensor (30).

8. Apparatus for the thermal deformation of a tool-holding fixture (11), in particular for the shrink fastening of a tool (12) in a tool-holding fixture (11), by heating by means of an inductive heating device (20) and cooling, **characterized in that** a resistance temperature sensor (30) is arranged in the alternating field of the heating device (20) and is suitable for the contactless detection of the temperature of the tool-holding fixture (11) in real time in this region by means of inductive heating on account of induced alternating currents in the alternating field and by means of the change in the specific resistance of the said sensor as a characteristic quantity for the temperature of the tool-holding fixture (11).

9. Apparatus according to Claim 8, **characterized in that** the sensor (30) is heated inductively in the alternating field of the heating device (20).

10. Apparatus according to Claim 8 or 9, **characterized in that** the sensor (30) is arranged in the inner annular region and at the same time at a distance from the coil former (27) of an induction coil (21) of the heating device (20).

11. Apparatus according to one of Claims 8 to 10, **characterized in that** the contactlessly operating sensor (30) is arranged near the surface (14) of the tool-holding fixture (11).

12. Apparatus according to one of Claims 8 to 11, **characterized in that** the sensor (30) is designed such that the change in its specific resistance resulting from the change in temperature can be used as a characteristic quantity for the temperature of the tool-holding fixture (11).

13. Apparatus according to one of Claims 8 to 12, **characterized in that** the sensor (30) is formed from metal.

14. Apparatus according to one of Claims 8 to 13, **characterized in that** the sensor (30) consists of platinum.

15. Apparatus according to one of Claims 8 to 14, **characterized in that** the sensor (30) is connected to a measuring device, for example a measuring bridge, by means of which the change in the specific resistance resulting from the temperature change is evaluated.

16. Apparatus according to Claim 15, **characterized by** a control device which controls the heating device (20) and which is activated by the measuring device.

## Revendications

1. Procédé de déformation thermique d'un logement d'outil (11), en particulier pour fixer un outil (12) dans un logement d'outil (11) en le sertissant par chauffage au moyen d'un dispositif (20) de chauffage par induction et par refroidissement,
**caractérisé en ce que**
on détecte en temps réel et sans contact la température du logement d'outil (11) en chauffant par induction une sonde (30) de température à résistance de la même manière que le logement d'outil (11) par les courants alternatifs induits dans le champ alternatif du dispositif de chauffage (20) et
**en ce qu'**on utilise comme grandeur caractéristique de la température du logement d'outil (11) la modification qui en résulte de la résistance spécifique de la sonde (30).

2. Procédé selon la revendication 1, **caractérisé en ce que** la sonde (30) détecte la température dans la partie annulaire intérieure et donc à distance du corps de bobine (27) d'une bobine d'induction (21) du dispositif de chauffage (20).

3. Procédé selon les revendications 1 ou 2,
**caractérisé en ce qu'**à l'aide de la sonde (30), on détecte sans contact la température à proximité de la surface (14) du logement d'outil (11).

4. Procédé selon l'une des revendications 1 à 3, **caractérisé en ce que** l'on détecte la température à l'aide d'une sonde (30) métallique.

5. Procédé selon l'une des revendications 1 à 4, **caractérisé en ce que** l'on détecte la température à l'aide d'une sonde (30) en platine.

6. Procédé selon l'une des revendications 1 à 5, **caractérisé en ce que** la modification de la résistance spécifique de la sonde (30) est évaluée à l'aide d'un dispositif de mesure, par exemple un pont de mesure.

7. Procédé selon l'une des revendications 1 à 6, **caractérisé en ce que** l'on branche ou débranche le dispositif de chauffage (20) en fonction de la température détectée par la sonde (30).

8. Dispositif de déformation thermique d'un logement d'outil (11), en particulier pour fixer un outil (12) dans un logement d'outil (11) en en le sertissant par chauffage au moyen d'un dispositif (20) de chauffage par induction et par refroidissement,
**caractérisé en ce que**
une sonde (30) de température à résistance est disposée dans le champ alternatif du dispositif de chauffage (20) et permet de détecter sans contact, en temps réel et par modification de sa résistance spécifique la température atteinte par cette partie du logement d'outil (11) suite au chauffage par induction dû aux courants alternatifs induits dans le champ alternatif, comme caractéristique de la température du logement d'outil (11).

9. Dispositif selon la revendication 8, **caractérisé en ce que** la sonde (30) est chauffée par induction dans le champ alternatif du dispositif de chauffage (20).

10. Dispositif selon les revendications 8 ou 9,
**caractérisé en ce que** la sonde (30) est disposée dans la partie annulaire intérieure et donc à distance du corps de bobine (27) d'une bobine d'induction (21) du dispositif de chauffage (20).

11. Dispositif selon l'une des revendications 8 à 10, **caractérisé en ce que** la sonde (30) travaillant sans contact est disposée à proximité de la surface (14) du logement d'outil (11).

12. Dispositif selon l'une des revendications 8 à 11, **caractérisé en ce que** la sonde (30) est configurée de telle sorte que la modification de sa résistance spécifique qui résulte de la modification de sa température peut être utilisée comme grandeur caractéristique de la température du logement d'outil (11).

13. Dispositif selon l'une des revendications 8 à 12, **caractérisé en ce que** la sonde (30) est réalisée en métal.

14. Dispositif selon l'une des revendications 8 à 13, **caractérisé en ce que** la sonde (30) est réalisée en platine.

15. Dispositif selon l'une des revendications 8 à 14, **caractérisé en ce que** la sonde (30) est reliée à un dispositif de mesure, par exemple un pont de mesure, qui permet d'évaluer la modification de sa résistance spécifique qui résulte de la modification de température.

16. Dispositif selon la revendication 15, **caractérisé par** un dispositif de commande qui commande le dispositif de chauffage (20) et qui est commandé par le dispositif de mesure.
